# EUROPEAN PATENT SPECIFICATION

(11) **EP 1 448 924 B1**
(45) Date of publication and mention of the grant of the patent: **27.07.2005**
(21) Application number: 02788564.9
(22) Date of filing: 11.11.2002
(51) Int. Cl.: F16L 5/06, F16L 19/065, H02G 3/06, H02G 3/08

(54) **SLEEVE OF A GLAND ASSEMBLY**
STOPFBUCHSENHÜLSE
MANCHON D'ENSEMBLE PRESSE-GARNITURE

(30) Priority: 19.11.2001 EP 01830714
(43) Date of publication of application: 25.08.2004
(73) Proprietor: MAXPLA S.R.L., I-20021 Cassina Nuova di Bollate (Milano) (IT)
(72) Inventor: MARELLI, Carlo c/o Maxpla S.r.l., I-20021 Cassina Nuova di Bollate(Milano) (IT)
(74) Representative: Vittorangeli, Lucia
(86) International application number: PCT/IT2002/000713
(87) International publication number: WO 2003/044411

(56) References cited:
- EP-A- 0 551 664
- DE-A- 3 604 213
- FR-A- 2 689 331
- FR-A- 2 786 247
- US-A- 4 410 479
- US-A- 5 378 027

## Description

The present invention relates to a sleeve or coupling for connecting tubular elements such as pipes or cables to one another or to operation and control boxes or panels provided in systems for various uses, such as electrical, hydraulic, pneumatic systems and the like.

In the above-mentioned systems, there is usually a need to lead a cable or pipe into a box, for example, containing controls or switches, in order to connect the cable or the pipe to any controls, valves, apparatus or the like contained in the box.

The cable or pipe may be led into the box simply by inserting the tubular element through a hole suitably formed in the wall of the box.

Usually, however, a sleeve is inserted in the opening in the box wall so to house the tubular element, allowing the element to extend into the box.

The sleeve can be tightened onto the tubular element in various ways in order to prevent an external force on the element, for example, a pulling force or an accidental tug, loosening the tubular element or pulling it out of the apparatus contained in the box, to which the element is connected.

In the conventional technique for mounting these sleeves, it is known to associate one or more sealing elements with the sleeve.

Known sealing elements (resilient rings such as O-rings) are associated with the sleeve during the installation of the system.

Examples of embodiment are described in documents US5,378,027, EP-A1-551664 and FR-A-2 786 247.

It is also known to form a sealing ring in a manner such that it is fixed firmly to the sleeve by techniques for co-moulding it onto the sleeve.

An example of the formation of a sleeve as described above is given in United States patent US 4410479.

However, the embodiments of sleeves according to the methods known from prior art have the disadvantage of being provided with a sealing component which can easily be separated from the body of the sleeve or not be installed with the sleeve due to forgetfulness or carelessness.

There has therefore been a need to produce a sleeve which is always certain to be installed with the sealing component included.

The problem underlying the present invention is that of devising a sleeve which has structural and functional characteristics such as to satisfy the above-mentioned needs and at the same time to overcome the disadvantages mentioned with reference to the prior art.

This problem is solved by a sleeve according to claim 1. Further forms of embodiment are described in the dependent claims relating respectively to these.

Further characteristics and the advantages of the sealing system according to the present invention will become clear from the following description of a preferred embodiment thereof, given by way of non-limiting example, in which the sleeve can be fixed and sealed onto an electrical connection cable and in which the cable extends through the sleeve in order to extend into a box containing electrical apparatus such as controls, operating devices, switches and the like.

The description is given below with reference to the appended drawings, in which:
Figure 1 is a perspective view of a sleeve, of a fixing ring nut, and of a tubular element partially engaged on the sleeve,
Figure 2 is a perspective view of the sleeve and of the fixing ring nut of Figure 1,
Figures 3a to 3c show a transverse section, a front view, and a plan view of the sleeve of Figure 1, respectively, and
Figure 4 is a plan view of the sleeve of Figure 1, through which a cable extends, and which is mounted in a wall and is associated with the clamping ring nut of Figure 1 and with an inner ring nut;

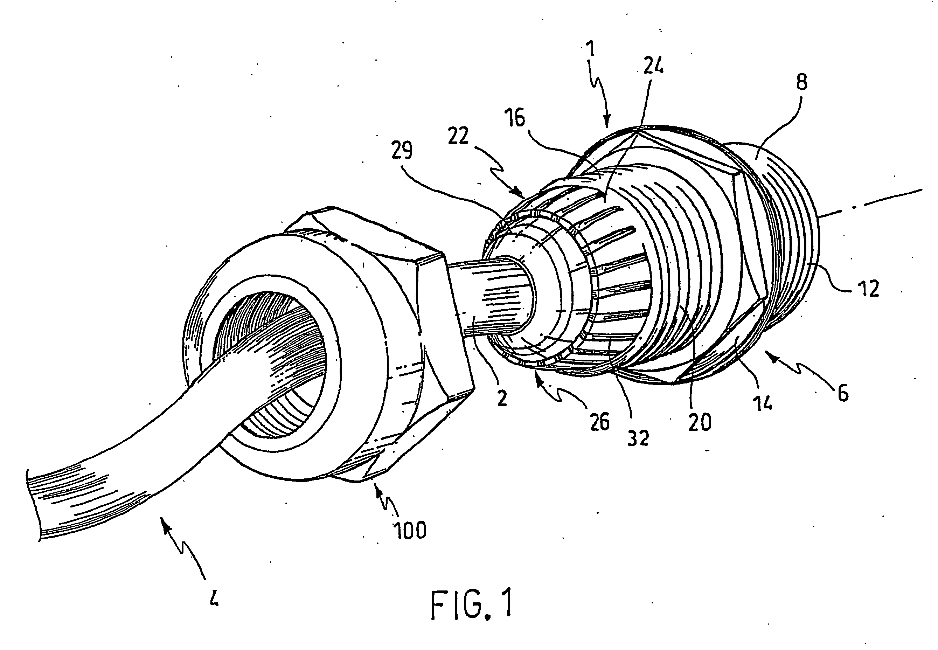

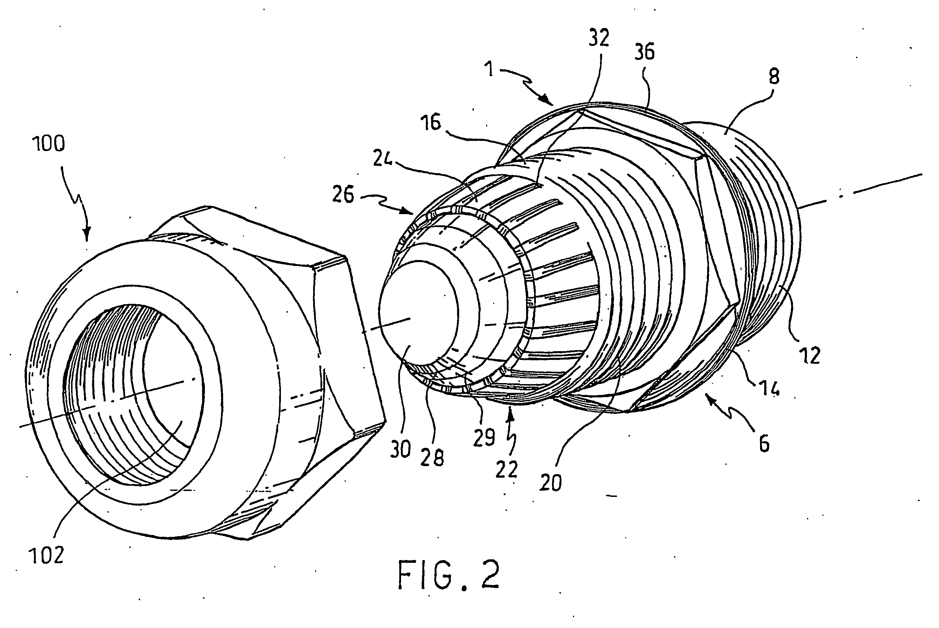

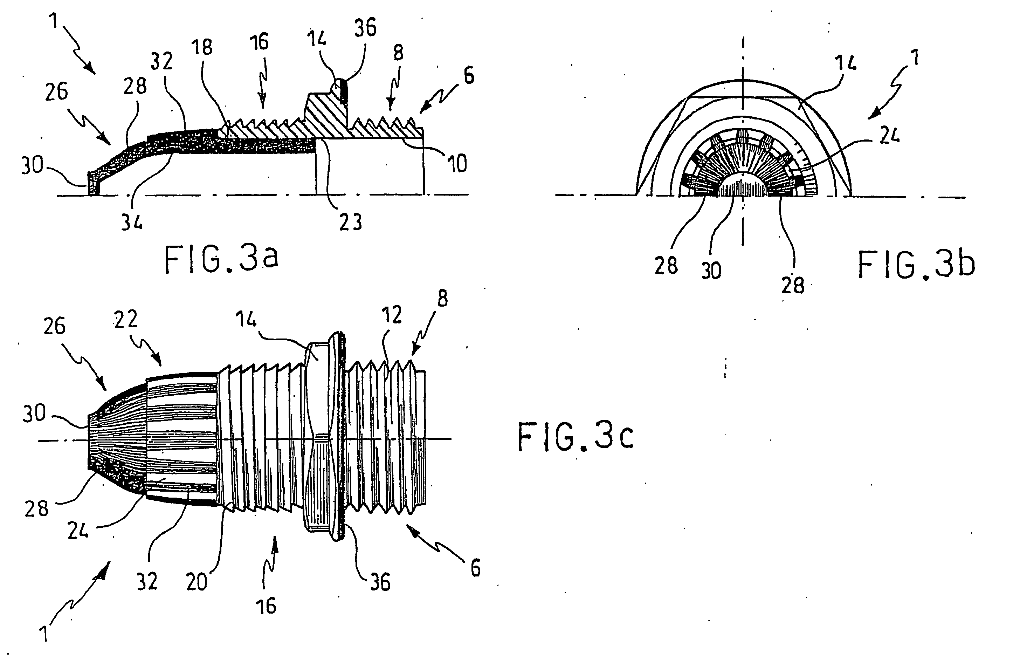

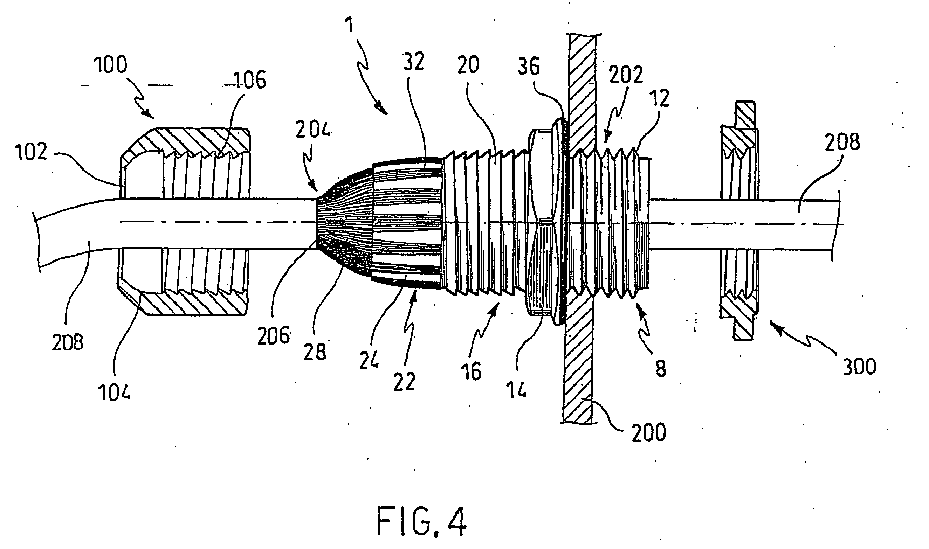

Figures 1 to 4 do not show the invention but show a way of using the invention.

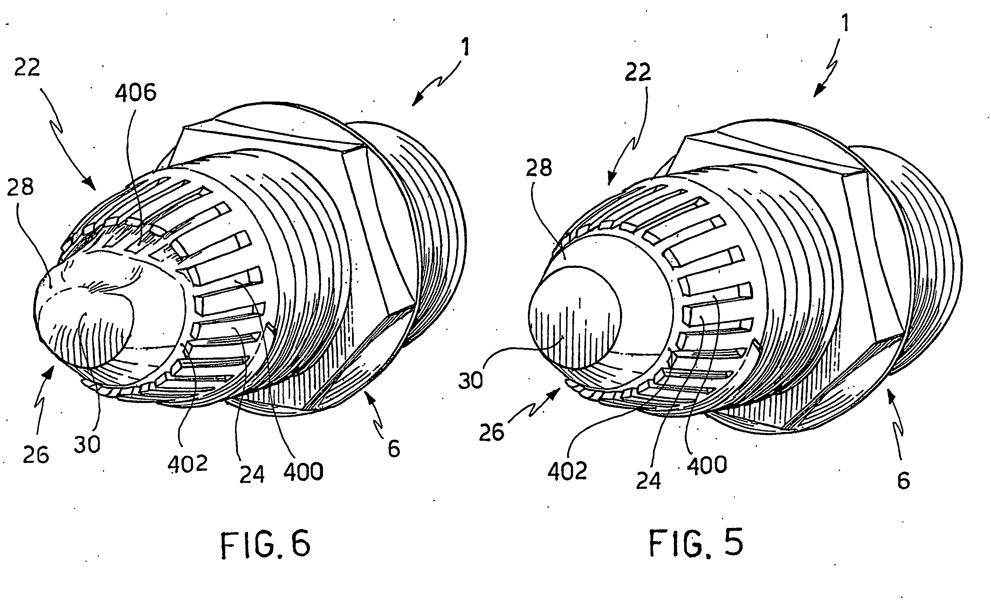

Figures 5 and 6 show perspective views of an embodiment of the sleeve according to the invention;

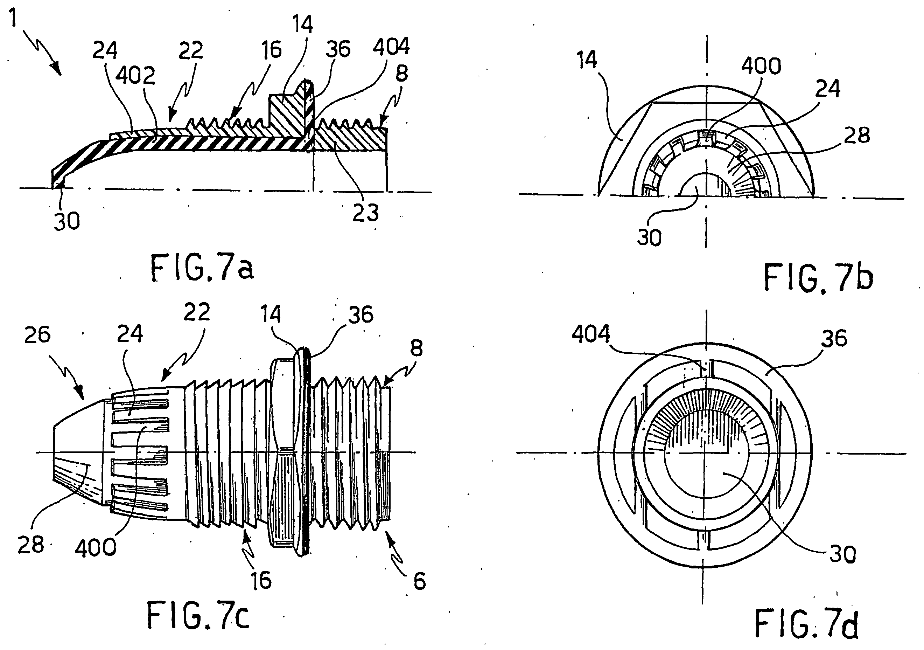

Figures 7a to 7d show respectively a view in transverse section, a view in front elevation, a plan view and a view in rear elevation of the sleeve in Figure 5.

With reference to the appended drawings, a sleeve for housing a portion 2 of a tubular element 4 is generally indicated 1.

The sleeve 1 comprises an internally hollow body 6 for housing the portion 2 of the tubular element 4.

In a preferred embodiment, the hollow body 6 extends along a central axis X-X, and preferably has a substantially cylindrical shape.

In a preferred embodiment, the hollow body 6 of the sleeve 1 comprises at least three tubular portions arranged in succession along the central axis X-X.

A first tubular portion 8 of the hollow body 6 of the sleeve 1 has a substantially smooth internal surface 10 whereas, externally, it has a thread 12 which extends from one end of the first tubular portion 8 to the other, terminating in the region of a circumferential projection 14.

The circumferential projection 14, which has a larger diameter than the first tubular portion 8 and than the second tubular portion 16 of the hollow body 6, preferably has a hexagonal shape suitable for cooperating with conventional screwing means such as workshop spanners, pliers, or the like.

A second portion 16 of the hollow body 6 of the sleeve 1 has a substantially smooth internal surface 18 and, externally, has a thread 20 which extends from the circumferential projection 14 to a flexible portion 22 of the hollow body 6 of the sleeve 1.

The diameter of the internal surface 10 of the first portion 8 of the hollow body 6 is preferably greater than the diameter of the internal surface 18 of the second portion 16 of the hollow body. The internal surfaces are adjacent one another and thus form a circumferential abutment 23.

The flexible portion 22 of the hollow body 6 of the sleeve 1 can be clamped around the portion 2 of the tubular element 4 which is housed in the hollow body 6.

In a preferred embodiment, the flexible portion 22 of the hollow body 6 comprises a portion provided with gripping fingers 24. The gripping fingers preferably extend, separately from one another, in the direction of the central axis X-X, in a "petal-like" configuration.

The sleeve 1 also comprises, in the region of the flexible portion 22 of the hollow body 6, a sealing element 26 which can be deformed, together with the flexible portion.

In a preferred embodiment, the sealing element 26 comprises a cap 28 projecting from the flexible portion 22 of the hollow body 6 and closed by a base 30.

The cap 28 preferably has gauge notches 29 arranged circumferentially on the outer surface of the cap 28. The gauge notches are preferably formed as grooves which are generally continuous and circumferential and are disposed on the outer surface of the cap 28. In a further embodiment, the notches are formed by visible and discontinuous marks, such as dashes, on the outer surface of the cap 28.

The sealing element 26 also comprises an incorporating portion 32 in which the flexible portion 22 of the hollow body 6 is embedded.

The incorporating portion 32 of the sealing element 26 preferably forms a single continuous body. In other words, the incorporating portion incorporates the gripping fingers 24 without being subdivided by the gripping fingers.

In other words, the sealing element 26 and the flexible portion 22 of the hollow body 6 form a single composite body in which the flexible portion 22 of the hollow body is configured as the supporting core and the incorporating portion 32 of the sealing element 26 is configured as the incorporating matrix.

A part of the incorporating portion 32 preferably forms a cylindrical, homogeneous and continuous seal 34 entirely enclosed by the gripping fingers 24 of the flexible portion 22 of the hollow body 6, forming a sheath sealing the sleeve 1 against the portion 2 of the tubular element 4 which is housed in the hollow body 6.

In a preferred embodiment, the flexible portion 22 of the hollow body 6 is configured as a cap section having a smaller end facing towards the cap 28 of the sealing element and a larger end facing the hollow body 6.

The flexible portion 22 of the hollow body 6 and the sealing element 26 in which the gripping portion is at least partially embedded form means for fixing and at the same time sealing the portion 2 of the tubular element 4 housed in the hollow body 6.

In a preferred embodiment, the sealing element 26 extends in the direction of the central axis X-X, inside the hollow body 6, adhering to the internal surface 18 of the second tubular portion 16 of the hollow body 6, preferably as far as the circumferential abutment 23 between the first tubular portion 8 of the hollow body 6 and the second tubular portion 16 of the hollow body.

The sealing element 26 is preferably fixed firmly to the flexible.portion 22 of the hollow body 6.

The sealing element is formed by a technique of co-moulding of the hollow body 6 and of the sealing element 26 by methods known in the art and not described in detail.

The sealing element 26 is preferably made of a material softer than the material forming the flexible portion 22 of the hollow body. Preferably, the sealing element is made of thermoplastic rubber and the flexible portion 22 of the hollow body 6 of rigid, preferably self-extinguishing thermoplastic material.

The sleeve 1 comprises a resilient sealing ring 36 of the type known as an O-ring, in the region of the peripheral edge of the circumferential projection 14, so as to face the thread 12 of the first tubular portion 8 of the hollow body 6.

The sealing ring 36 is formed by co-moulding with the hollow body 6 by methods known in the art and not described below.

The sleeve 1 can be associated with a clamping ring nut 100 suitably shaped externally so as to cooperate with workshop tools such as spanners, pliers and the like, which can grip the ring nut and screw it onto the hollow body 6 of the sleeve 1 in the region of the flexible portion 22 and of the sealing element 26 of the sleeve 1.

The clamping ring nut 100 is a preferred and non-limiting example of clamping means.

In a further embodiment, the clamping means may be formed by at least one band which can be tightened onto the assembly of the sealing element 26 and of the flexible portion 22 of the sleeve 1, for example, by means of a nut-and-bolt connection.

Moreover, the clamping means may be formed by a band, preferably of metal, which can be subjected to plastic deformation onto the assembly formed by the sealing element 26 and the flexible portion 22 of the sleeve 1, for example, by means of a crimping tool.

The hollow clamping ring nut 100 has an opening 102 at one of its ends.

The diameter of the opening 102 in the ring nut 100 is substantially larger than the diameter of the end 30 of the sealing element 26 of the sleeve 1 and substantially smaller than the maximum diameter of the cap 28 of the sealing element 26.

In the region of the opening 102 in the ring nut 100, the ring nut 100 has, internally, a first, concave portion 104 which extends from the opening 102 to a second, threaded portion 106 of the internal surface of the ring nut 100.

During the installation of electrical, hydraulic or pneumatic systems and the like, both industrial and domestic, the sleeve 1 can be used, in particular, for enabling a tubular element such as a cable, a pipe, or the like to extend through the outer casings of various devices, for example, through the walls of a box.

Generally, a hole 202 is formed in the wall 200 of a box, for example, an electrical box containing switches and various other devices, and the first tubular portion 8 of the sleeve 1 can be inserted therein, preferably by being screwed into the hole.

A portion of the cap 28 of the sealing element 26 is removed from the sleeve 1 by means of suitable a cutting tool, for example, conventional scissors, wire strippers, electricians' nippers or the like so as to form, in the cap, an opening 204 provided with a rim 206.

A cable 208 or a pipe can pass through the opening 204 in the cap 28 of the sleeve 1 so that the cable 208 can be threaded through the sleeve 1. Moreover, the opening 204 in the cap 28 is such that, when the sleeve is coupled with the cable 208, its rim 206 remains in contact with the surface of the cable 208.

The notches 29 formed in the cap 28 of the sleeve 1 define portions of the cap 28 which can be removed, in dependence on the nominal diameter dimension of the cable 209 to be inserted in the sleeve. By way of example, a first notch may define the point on the cap 28 at which to perform the removal in order to insert a cable of 12.7 mm (½ inch) nominal diameter and a further notch may define the point on the cap 28 at which to perform the removal in order to insert a cable of 19.1 mm (¾ inch) nominal diameter.

The cable 208 extends through the opening 102 in the ring nut 100, through the opening 204 in the cap 26 of the sleeve, through the sleeve 1, and through an inner ring nut 300, to reach the interior of the box.

The inner ring nut 300 can be coupled with the sleeve 1 in the region of the first tubular portion 8 of the hollow body 6 which, in the assembled condition, is disposed on the inner side of the wall 200.

The ring nut 300 can be screwed onto the first tubular portion 8 of the sleeve 1 and, by interacting with the wall 200 during the screwing, pulls the sleeve towards the inner side of the wall. The action of the ring nut 300 results in compression of the sealing ring 36 against the outer surface of the wall 200, producing a seal between the outer surface of the wall 200 and the sleeve 1.

The fixing ring nut 100 can be coupled with the second tubular portion 16 of the sleeve 1 which, in the assembled condition, is disposed on the outer side of the wall 200 of the box.

The threaded portion 106 of the fixing ring nut 100 is screwed onto the thread 20 of the second tubular portion 16 of the sleeve 1.

The concave portion 104 of the fixing ring nut 100 interferes with the sealing element 26 and the flexible portion 22 of the sleeve 1, clamping the sealing element 26 and the flexible portion 22 onto the cable 208.

In other words, as the ring nut moves along the thread 20 of the second tubular portion 16 of the sleeve 1, the concave portion 104 of the fixing ring nut 100 compresses the sealing element 26 and the flexible portion 22 of the sleeve 1, clamping them onto the cable 208.

The sealing element 26 and the flexible portion 22, which form means for fixing and at the same time sealing the sleeve 1, can therefore be activated by the fixing ring nut 100, which forms clamping means.

In particular, the fixing ring nut 100 interferes with the flexible portion 22 of the hollow body 6 of the sleeve 1 which, as described above, is incorporated in the sealing element 26.

In particular, the sealing element 26, compressed by the flexible portion 22 of the hollow body, is clamped onto the cable 208, forming combined fixing and sealing means which are particularly resistant to wear and abrasion due to the action of the ring nut.

According to the invention, the sleeve 1 comprises an internally hollow body 6 adapted to receive the portion 2 of the tubular element 4, in which the first tubular portion 8 of the hollow body 6 of the sleeve 1 has an inside diameter smaller than the inside diameter of the second tubular portion 16, thus producing a circumferential rebate 23 (figures 5, 6, 7a-7d).

The flexible portion 22 of the hollow body 6 comprises the gripping fingers 24 which run in succession around the circumference separately from each other, alternating with spaces 400 substantially free of sealing material.

In other words, between the gripping fingers 24, for the greater part of their extension in a radial direction, i.e. for the greater part of their radial thickness, said flexible portion 22 does not have sealing material.

The sealing element 26 comprises the cap 28, projecting relative to the flexible portion 22 of the hollow body 6, closed by a base 30, and a cylindrical wall 402 which extends from the cap to the circumferential rebate 23, remaining contained within the gripping fingers 24.

In other words, said cylindrical wall 402 has an outside diameter substantially equal to the inside diameter of the gripping fingers 24 and of the second tubular portion 16.

The sealing element 26 is produced by co-moulding with the hollow body 6.

The flexible portion 22 of the hollow body 6 is partially let into the sealing element 26, since, by virtue of the co-moulding process, the sealing material runs along the inner surface of the gripping fingers 24, so that they are partially let into it.

This is particularly clear if the sealing element 26 is moved aside from said gripping fingers 24 (figure 6): indentations 406 left by said fingers on the sealing component demonstrate that they are partially let into the sealing element.

The resilient sealing ring 36 is produced by co-moulding with the sealing element 26, by virtue of channels 404 provided in the hollow body 6.

In other words, the cap 28, the circumferential wall 402 and the sealing ring 36 form a single body which cannot be separated from the hollow body of the coupling unless the pieces are torn apart.

Said channels 404 form passages for the material which forms the sealing element 26 between the inner surface of said hollow body and its outer surface. Said channels are preferably provided at the circumferential rebate 23.

Said channels form passages which extend radially, tangentially or circumferentially relative to the hollow body.

The main advantage of the sleeve consists in the formation of a fixing and of a seal on a tubular element which are particularly wear-resistant, above all, when the fixing and the sealing of the sleeve onto the tubular element are achieved by means of a ring nut which clamps the sealing element onto the tubular element.

Moreover, the sleeve advantageously has fixing and sealing means which display optimal resilient recovery so that the sleeve can be reused several times without showing a shape memory in the sealing element which is subjected to deformation.

Moreover, the sleeve has the advantage of having a sealing element which is positioned precisely at a flexible end of the sleeve body, ensuring that a force exerted on the flexible body by means of the fixing means such as a ring nut, a band, or the like, induces optimal deformation of the sealing element onto the tubular portion, ensuring optimal fitting, even if it is performed by unskilled personnel.

Advantageously, the sleeve provides a sealing element which cannot easily be lost or separated from the sleeve body.

In other words, the formation of the sealing element integrally with the sleeve body results in inseparability of the sealing element and the sleeve body. This ensures that the fitting of the sleeve is always performed in accordance with the installation standards, even if it is performed by an unskilled or careless operator.

Finally, producing the sealing element in one piece with the sealing ring means, advantageously, that said sealing element cannot be separated from said body of the sleeve.

Naturally, in order to satisfy contingent and specific requirements, a person skilled in the art may apply to the sleeve described and illustrated with reference to the drawings, many modifications and variations all of which, however, are included within the scope of protection of the invention as defined by the appended claims.

## Claims

1. Sleeve (1) suitable for housing at least a portion (2) of a tubular element (4), and which comprises:
- an internally hollow body (6) for housing the said portion of the tubular element (4), the body having at least one flexible portion (22) which can be clamped around the said portion of the tubular element (4), and
- a sealing element (26) provided in the region of the flexible portion of the body (6) of the sleeve (1) and deformable together therewith, and
- a resilient sealing ring (36),
the sleeve being associable with clamping means suitable for deforming the assembly formed by the flexible portion of the body (6) of the sleeve (1) and the sealing element onto the said portion housed in the body (6) of the sleeve (1),
the sleeve being **characterized in that**
said sealing element and said sealing ring (36) are produced using techniques of co-moulding said sealing element (26) with said sealing ring (36) and with the hollow body (6), **in that**
said resilient sealing ring (36) is disposed in the region of a peripheral edge of an outer circumferential projection (14) of said hollow body (6), and **in that**
said sealing ring (36) is connected to said sealing element by sealing material contained in channels (404) in the hollow body (6).

2. Sleeve (1) according to Claim 1 in which the sealing element (26) has an end cap (28) closed by a base (30) which can be removed at least partially to permit the introduction of the portion of the tubular element housed in the sleeve.

3. Sleeve according to Claim 1 or 2, in which the flexible portion (22) of the hollow body (6) is at least partially embedded in the sealing element (26), a portion of the sealing element (26) forming a homogeneous and continuos seal (34), entirely inside the flexible portion (22).

4. Sleeve according to any one of Claims 1 to 3, in which the flexible portion (22) of the hollow body (6) comprises a plurality of gripping fingers (24) which project from the hollow body (6) in the direction of a central axis (XX) of the hollow body.

5. Sleeve according to any one of Claims 1 to 4, in which the flexible portion (22) is shaped substantially as a cap section having its smaller base projecting from the hollow body (6) of the sleeve farther than its larger base.

6. Sleeve according to any one of the preceding claims in which the sealing element (26) is made of a material which can deform in order to form a seal against the portion (2) of the tubular element (4), and the flexible portion (22) of the hollow body (6) of the sleeve is made of a flexible material which can squeeze a portion of the sealing element (26) in order to deform it onto the portion (2) of the tubular element (4).

7. Sleeve according to Claim 6 in which the sealing element (26) is made of thermoplastic rubber.

8. Sleeve according to Claim 6 or 7 in which the flexible portion (22) of the hollow body is made of thermoplastic material.

9. Sleeve according to Claim 8 in which the flexible portion (22) of the hollow body (6) is made of self-extinguishing thermoplastic material.

10. Sleeve according to any of the preceding claims, in which the flexible portion (22) of the hollow body (6) has indentations (406) of the gripping fingers (24) .

11. Sleeve according to any of the preceding claims, in which the flexible portion (22) of the hollow body (6) has gripping fingers (24) which run successively in a circumferential direction, separately from each other.

12. Sleeve according to claim 11, in which said gripping fingers 24 run successively in a circumferential direction, alternating with spaces (400) substantially free of sealing material.

13. Sleeve according to any of the preceding claims, in which said sealing element (26) comprises a cap (28) and a cylindrical wall (402) which extends from the cap (28) to a circumferential rebate (23) inside the hollow body (6).

14. Sleeve according to claim 13, in which said cylindrical wall (402) has an outside diameter substantially equal to the inside diameter of the gripping fingers (24).

15. Mounting kit comprising a sleeve according to any one of the preceding claims and at least one clamping element (100) for cooperating with the hollow body (6) of the sleeve (1), clamping the assembly formed by the flexible portion (22) and of the sealing element (26) onto the portion (2) of the tubular element (4) housed in the sleeve (1).

16. Mounting kit according to Claim 15 in which the clamping element is a clamping band which can be tightened around the assembly formed by the flexible portion (22) and the sealing element (26) of the sleeve (1).

17. Mounting kit according to Claim 15 in which the clamping element is a clamping band which can undergo plastic deformation around the assembly formed by the flexible portion (22) and the sealing element (26) of the sleeve (1).

18. Mounting kit according to Claim 15 in which the clamping element is a clamping ring nut (100).

19. Mounting kit according to Claim 19 in which the ring nut has a hollow internal portion (104) which can interfere with the assembly formed by the sealing element (26) and the flexible portion (22) of the sleeve (1) when the ring-nut (100) is in the mounted configuration on the sleeve (1), clamping the assembly onto the tubular portion housed in the sleeve (1).

## Patentansprüche

1. Muffe (1), die geeignet ist, um wenigstens einen Abschnitt (2) eines röhrenförmigen Elementes (4) aufzunehmen und die umfasst:
einen inneren hohlen Körper (6), der den Abschnitt des röhrenförmigen Elementes (4) aufnimmt, wobei der Körper wenigstens einen flexiblen Abschnitt (22) aufweist, der um den Abschnitt des röhrenförmigen Elementes (4) herum geklemmt werden kann, und
ein Dichtungselement (26), das in dem Bereich des flexiblen Abschnitts des Körpers (6) der Muffe (1) vorhanden ist und damit verformt werden kann, und
einen elastischen Dichtungsring (36),
wobei die Muffe mit Klemmeinrichtungen verbunden werden kann, die sich eignen, um die Baugruppe, die durch den flexiblen Abschnitt des Körpers (6) der Muffe (1) und das Dichtungselement gebildet wird, auf den Abschnitt zu verformen, der in dem Körper (6) der Muffe (1) aufgenommen ist,
wobei die Muffe **dadurch gekennzeichnet ist, dass**:
das Dichtungselement und der Dichtungsring (36) unter Verwendung von Verfahren des Zusammenformens des Dichtungselementes (26) mit dem Dichtungsring (36) und mit dem hohlen Körper (6) hergestellt werden,
**dadurch**, dass
der elastische Dichtungsring (36) im Bereich eines Umfangsrandes eines Außenumfangsvorsprungs (14) des hohlen Körpers (6) angeordnet ist, und, dass
der Dichtungsring (36) mit dem Dichtungselement durch Dichtungsmaterial verbunden ist, das in Kanälen (404) in dem hohlen Körper (6) enthalten ist.

2. Muffe (1) nach Anspruch 1, wobei das Dichtungselement (26) eine Abschlusskappe (28) hat, die durch einen Sockel (30) verschlossen wird, der wenigstens teilweise entfernt werden kann, um das Einführen des Abschnitts des röhrenförmigen Elementes zuzulassen, der in der Muffe aufgenommen ist.

3. Muffe nach Anspruch 1 oder 2, wobei der flexible Abschnitt (22) des hohlen Körpers (6) wenigstens teilweise in dem Dichtungselement (26) eingebettet ist, und ein Abschnitt des Dichtungselementes (26) eine gleichmäßige und durchgehende Dichtung (34) vollständig im Inneren des flexiblen Abschnitt (22) bildet.

4. Muffe nach einem der Ansprüche 1 bis 3, wobei der flexible Abschnitt (22) des hohlen Körpers (6) eine Vielzahl von Greiffingern (24) umfasst, die von dem hohlen Körper (6) in der Richtung einer Mittelachse (XX) des hohlen Körpers vorstehen.

5. Muffe nach einem der Ansprüche 1 bis 4, wobei der flexible Abschnitt (22) im Wesentlichen als ein Kappenabschnitt ausgebildet ist, dessen schmalerer Sockel von dem hohlen Körper (6) der Muffe weiter vorsteht als sein größerer Sockel.

6. Muffe nach einem der vorangehenden Ansprüche, wobei das Dichtungselement (26) aus einem Material besteht, dass sich verformen kann, um eine Dichtung an dem Abschnitt (2) des röhrenförmigen Elementes (4) zu bilden, und der flexible Abschnitt (22) des hohlen Körpers (6) der Muffe aus einem flexiblen Material besteht, das einen Abschnitt des Dichtungselementes (26) zusammendrücken kann, um es auf den Abschnitt (2) des röhrenförmigen Elementes (4) zu verformen.

7. Muffe nach Anspruch 6, wobei das Dichtungselement (26) aus thermoplastischem Elastomer besteht.

8. Muffe nach Anspruch 6 oder 7, wobei der flexible Abschnitt (22) des hohlen Körpers aus Thermoplastmaterial besteht.

9. Muffe nach Anspruch 8, wobei der flexible Abschnitt (22) des hohlen Körpers (6) aus selbstverlöschendem Thermoplastmaterial besteht.

10. Muffe nach einem der vorangehenden Ansprüche, wobei der flexible Abschnitt (22) des hohlen Körpers (6) Vertiefungen (406) der Greiffinger (24) hat.

11. Muffe nach einem der vorangehenden Ansprüche, wobei der flexible Abschnitt (22) des hohlen Körpers (6) Greiffinger (24) hat, die aufeinander folgend in einer Umfangsrichtung getrennt voneinander verlaufen.

12. Muffe nach Anspruch 11, wobei die Greiffinger (24) aufeinander folgend in einer Umfangsrichtung verlaufen und sich mit Zwischenräumen (400) abwechseln, die im Wesentlichen frei von Dichtungsmaterial sind.

13. Muffe nach einem der vorangehenden Ansprüche, wobei das Dichtungselement (26) eine Kappe (28) und eine zylindrische Wand (402) umfasst, die sich von der Kappe (28) zu einem Umfangsfalz (23) im Inneren des hohlen Körpers (6) erstreckt.

14. Muffe nach Anspruch 13, wobei die zylindrische Wand (402) einen Außendurchmesser hat, der im Wesentlichen dem Innendurchmesser der Greiffinger (24) gleich ist.

15. Montagesatz, der eine Muffe nach einem der vorangehenden Ansprüche und wenigstens ein Klemmelement (100) zum Zusammenwirken mit dem hohlen Körper (6) der Muffe (1) umfasst, das die durch den flexiblen Abschnitt (22) und das Dichtungselement (26) gebildete Baugruppe auf den Abschnitt (2) des röhrenförmigen Elementes (4) klemmt, das in der Muffe (1) aufgenommen ist.

16. Montagesatz nach Anspruch 15, wobei das Klemmelement ein Klemmband ist, das um die Baugruppe, die durch den flexiblen Abschnitt (22) und das Dichtungselement (26) der Muffe (1) gebildet wird, herum gespannt werden kann.

17. Montagesatz nach Anspruch 15, wobei das Klemmelement ein Klemmstreifen ist, der plastische Verformung um die Baugruppe herum erfahren kann, die durch den flexiblen Abschnitt (22) und das Dichtungselement (26) der Muffe (1) gebildet wird.

18. Montagesatz nach Anspruch 15, wobei das Klemmelement eine Klemm-Ringmutter (100) ist.

19. Montagesatz nach Anspruch 18, wobei die Ringmutter einen hohlen Innenabschnitt (104) hat, der mit der Baugruppe in Eingriff kommen kann, die durch das Dichtungselement (26) und den flexiblen Abschnitt (22) der Muffe (1) gebildet wird, wenn sich die Ringmutter (100) in der angebrachten Position an der Muffe (1) befindet und die Baugruppe an den röhrenförmigen Abschnitt klemmt, der in der Muffe (1) aufgenommen ist.

## Revendications

1. Manchon (1) convenant pour loger au moins une partie (2) d'un élément tubulaire (4), et qui comprend :
- un corps creux à l'intérieur (6) destiné à recevoir ladite partie de l'élément tubulaire (4), le corps comportant au moins une partie souple (22) qui peut être serrée autour de ladite partie de l'élément tubulaire (4), et
- un élément d'étanchéité (26) prévu dans la région de la partie souple du corps (6) du manchon (1) et déformable avec celle-ci, et
- une bague d'étanchéité élastique (36),
le manchon pouvant être associé à un moyen de serrage approprié pour déformer l'ensemble formé par la partie souple du corps (6) du manchon (1) et l'élément d'étanchéité sur ladite partie reçue dans le corps (6) du manchon (1),
le manchon étant **caractérisé en ce que**
ledit élément d'étanchéité et ladite bague d'étanchéité (36) sont produits en utilisant des techniques consistant à mouler conjointement ledit élément d'étanchéité (26) avec ladite bague d'étanchéité (36) et avec le corps creux (6), **en ce que**
ladite bague d'étanchéité élastique (36) est disposée dans la région d'un bord périphérique d'une protubérance circonférentielle extérieure (14) dudit corps creux (6), et **en ce que** ladite bague d'étanchéité (36) est reliée audit élément d'étanchéité par un matériau d'étanchéité contenu dans des canaux (404) dans le corps creux (6).

2. Manchon (1) selon la revendication 1, dans lequel l'élément d'étanchéité (26) comporte un capuchon d'extrémité (28) fermé par une base (30) qui peut être ôtée au moins partiellement pour permettre l'introduction de la partie de l'élément tubulaire reçue dans le manchon.

3. Manchon selon la revendication 1 ou 2, dans lequel la partie souple (22) du corps creux (6) est au moins partiellement incorporée dans l'élément d'étanchéité (26), une partie de l'élément d'étanchéité (26) formant un joint homogène et continu (34), entièrement à l'intérieur de la partie souple (22).

4. Manchon selon l'une quelconque des revendications 1 à 3, dans lequel la partie souple (22) du corps creux (6) comprend une pluralité de doigts de prise (24) qui dépassent du corps creux (6) dans la direction d'un axe central (XX) du corps creux.

5. Manchon selon l'une quelconque des revendications 1 à 4, dans lequel la partie souple (22) se présente sensiblement sous la forme d'une partie de capuchon dont la base plus petite dépasse du corps creux (6) du manchon plus loin que sa base plus grande.

6. Manchon selon l'une quelconque des revendications précédentes, dans lequel l'élément d'étanchéité (26) est constitué d'un matériau qui peut se déformer de manière à former un joint contre la partie (2) de l'élément tubulaire (4), et la partie souple (22) du corps creux (6) du manchon est constituée d'un matériau souple qui peut serrer une partie de l'élément d'étanchéité (26) de manière à le déformer sur la partie (2) de l'élément tubulaire (4).

7. Manchon selon la revendication 6, dans lequel l'élément d'étanchéité (26) est constitué d'un caoutchouc thermoplastique.

8. Manchon selon la revendication 6 ou 7, dans lequel la partie souple (22) du corps creux est faite d'un matériau thermoplastique.

9. Manchon selon la revendication 8, dans lequel la partie souple (22) du corps creux (6) est faite d'un matériau thermoplastique auto-extinguible.

10. Manchon selon l'une quelconque des revendications précédentes, dans lequel la partie souple (22) du corps creux (6) présente des empreintes (406) des doigts de prise (24).

11. Manchon selon l'une quelconque des revendications précédentes, dans lequel la partie souple (22) du corps creux (6) comporte des doigts de prise (24) qui sont situés successivement selon une direction circonférentielle, séparément les uns des autres.

12. Manchon selon la revendication 11, dans lequel lesdits doigts de prise (24) sont situés successivement dans une direction circonférentielle, en alternant avec des espaces (400) pratiquement exempts de matériau d'étanchéité.

13. Manchon selon l'une quelconque des revendications précédentes, dans lequel ledit élément d'étanchéité (26) comprend un capuchon (28) et une paroi cylindrique (402) qui s'étend depuis le capuchon (28) jusqu'à une partie réduite circonférentielle (23) à l'intérieur du corps creux (6).

14. Manchon selon la revendication 13, dans lequel ladite paroi cylindrique (402) présente un diamètre extérieur sensiblement égal au diamètre intérieur des doigts de prise (24).

15. Kit de montage comprenant un manchon selon l'une quelconque des revendications précédentes, et au moins un élément de serrage (100) destiné à coopérer avec le corps creux (6) du manchon (1), à serrer l'ensemble formé par la partie souple (22) et l'élément d'étanchéité (26) sur la partie (2) de l'élément tubulaire (4) reçu dans le manchon (1) .

16. Kit de montage selon la revendication 15, dans lequel l'élément de serrage est une bande de serrage qui peut être serrée autour de l'ensemble formé par la partie souple (22) et l'élément d'étanchéité (26) du manchon (1).

17. Kit de montage selon la revendication 15, dans lequel l'élément de serrage est une bande de serrage qui peut subir une déformation plastique autour de l'ensemble formé par la partie souple (22) et l'élément d'étanchéité (26) du manchon (1).

18. Kit de montage selon la revendication 15, dans lequel l'élément de serrage est une bague-écrou de serrage (100).

19. Kit de montage selon la revendication 18, dans lequel la bague-écrou présente une partie interne creuse (104) qui peut interférer avec l'ensemble formé par l'élément d'étanchéité (26) de la partie souple (22) du manchon (1) lorsque la bague-écrou (100) est dans la configuration montée sur le manchon (1), en serrant l'ensemble sur la partie tubulaire reçue dans le manchon (1) .
